Europäisches Patentamt

European Patent Office

Office européen des brevets

(11) Veröffentlichungsnummer: **0 077 883**
**B1**

(12) **EUROPÄISCHE PATENTSCHRIFT**

(45) Veröffentlichungstag der Patentschrift:
19.03.86

(51) Int. Cl.⁴: **A 47 J 41/02**

(21) Anmeldenummer: 82106820.2

(22) Anmeldetag: 28.07.82

(54) Isolierkanne.

(30) Priorität: 28.10.81 DE 3142721

(43) Veröffentlichungstag der Anmeldung:
04.05.83 Patentblatt 83/18

(45) Bekanntmachung des Hinweises auf die Patenterteilung:
19.03.86 Patentblatt 86/12

(84) Benannte Vertragsstaaten:
AT BE CH FR GB IT LI LU NL SE

(56) Entgegenhaltungen:
DE - A - 2 355 610
FR - A - 1 505 066
FR - A - 2 167 305

(73) Patentinhaber: hartolit Adalbert Schmitt,
Kreuzstrasse 26, D-6983 Kreuzwertheim (DE)

(72) Erfinder: Pawski, Leonhard, Lengfurter Strasse 32,
D-6983 Kreuzwertheim (DE)

(74) Vertreter: Eyer, Eckhardt Philipp, Dipl.-Ing. et al,
Patentanwälte Eyer & Linser Robert-Bosch-Strasse 12a,
D-6072 Dreieich (DE)

LIBER, STOCKHOLM 1986

## Beschreibung

Die Erfindung betrifft eine Isolierkanne, bestehend aus einem Isolergefäß und einem mit einem Ausgieße, versehenen Kannenkopf, dessen Öffnung mittels eines Schraub- oder Bajonett-Verschluß-Deckels ver schließbar ist, der in eine, Öffnung eines am Kannenrand gehaltenen, nach Art eines zweiarmigen Hebels ausgebildeten Rahmens gehalten ist, mit dessen Hilfe er um eine parallel zur Drehebene des Deckels verlaufende Achse aus seiner Schließstellung in seine das Ausgießen der Flüssigkeit aus der Kanne ermöglichende Offenstellung verschwenkt werden kann.

Bei einer bekannten Isolierkanne dieser Art (De-OS 23 55 610 wird die Öffnung des zweiarmigen Hebels von einem gabelförmigen Flansch gebildet, wobei der bajonettverschluß von zwei am Kannenkörper angeordneten Riegelzapfen und zwei am Deckel ausgebildeten, sich an der schmalsten Stelle öffnenden Kulissen gebildet ist. Zur Ermöglichung des Ausgießens des Kanneninhaltes in Einhandbedienung ist der gabelförmige Flansch derart angeordnet, daß er den Deckel unterhalb der Kulisse umfaßt, wobei der Bajonettverschluß gleichzeitig als Begrenzung für den Hub des Deckels dient, der auf das durch die Steigung der Kulisse vorgegebene Höhe beschränkt ist und bei Aufdrehen des Deckels bis in seine Endstellung unmittelbar außer Funktion tritt. Hieraus ergibt sich der wesentliche Nachteil, daß die Kanne bei bestimmungsgemäß erfolgender Rückdrehung innerhalb des Drehwinkels der Kulisse nur ungenügend geöffnet werden kann, während bei Rückdrehung bis in eine das vollständige Öffnen ermöglichende Stellung die Sicherung des Deckels als auch des Hebelarmes gegen Herausfallen beseitigt ist. Hinzu kommt aufgrund der gabelförmigen Ausbildung des den Deckel umfassenden Armes des Rahmens eine große Labilität des Hebels einerseits und eine erhebliche Beschränkung der konstruktiven Gestaltungsfreiheit der Kanne andererseits.

Der Erfindung liegt als Aufgabe die Schaffung einer Isolierkanne zugrunde, die bei Gewährleistung einer sicheren Halterung des Deckels eine vollständiges Offnen der Ausgießeröffnung ermöglicht und die konstruktive Gestaltungsfreiheit vergrößert.

Diese Aufgabe wird erfindungsgemäß dadurch gelöst, daß die Öffnung des zweiarmigen Hebels von einem Ringflansch gebildet und der Deckel zweiteilig aus einem inneren, mit einem Gewinde- bzw. Bajonettsegment versehenen Dichtteil und einem äußeren Betätigungsteil ausgebildet ist, die jedes mit einem Ringflansch versehen sind, die gemeinsam eine Ringnut ein-schließen, in die der Ringflansch mit allseitigem Spiel eingreift.

Durch die Erfindung ist eine Isolierkanne geschaffen, die es erlaubt, durch Drehung des Deckels in der üblichen Weise unter Öffnen der Dichtung den Verschluß zu lösen, der danach weiterhin in dem Rahmen gehalten und durch Aufschwenken des Rahmens um seine Drchachse vollständig aus der Ausgießöffnung ausgeschwenkt werden kann. Darüberhinaus kann im Hinblick darauf, daß die Öffnung des zweiarmigen Hebels von einem Ringflansch in einem Rahmen gebildet wird, der Hebel bzw. der Rahmen beliebig und stabil gestaltet werden. Durch die zweiteilige Ausbildung des Deckels ist der Deckel auf einfache Weise mit dem Hebel zuverlässig verbindbar.

Das Dichtteil und das Betätigungsteil sind vorteilhaft mittels einer Nut-Feder-Raste zusammengeclipst, wobei das Dichtteil mit einem Steg versehen ist, der in eine Ausnehmung des Betätigungsteils eingreift. Es ist weiterhin vorteilhaft der Rahmen lösbar am Kannenkörper angeordnet, zu welchem Zweck vorteilhaft am Kannenkörper Lagerstege mit durch Schlitze geöffneten Lagerschalen und am Rahmen derart parallel abgeflachte Achszapfen angeordnet sind, daß sie in der einen Richtung einen der Lagerschale entsprechenden Durchmesser und in der hierzu senkrechten Richtung eine dem Schlitz entsprechende Breite besitzen.

Nachstehend sind Ausführungsbeispiele der Erfindung anhand der Zeichnung erläutert. In diesen zeigen

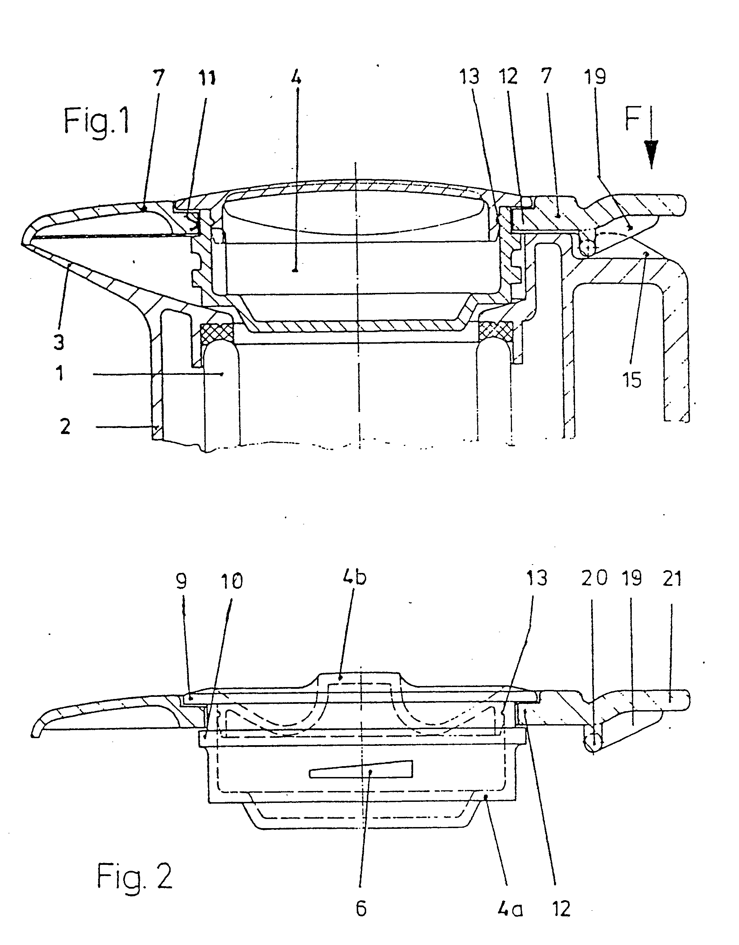

Fig. 1 einen Schnitt durch eine erfindungsgemäße Isolierkanne im Deckelbereich

Fig. 2 einen der Fig. 1 entsprechenden Schnitt durch den Rahmen mit darin gehamltenem Deckel

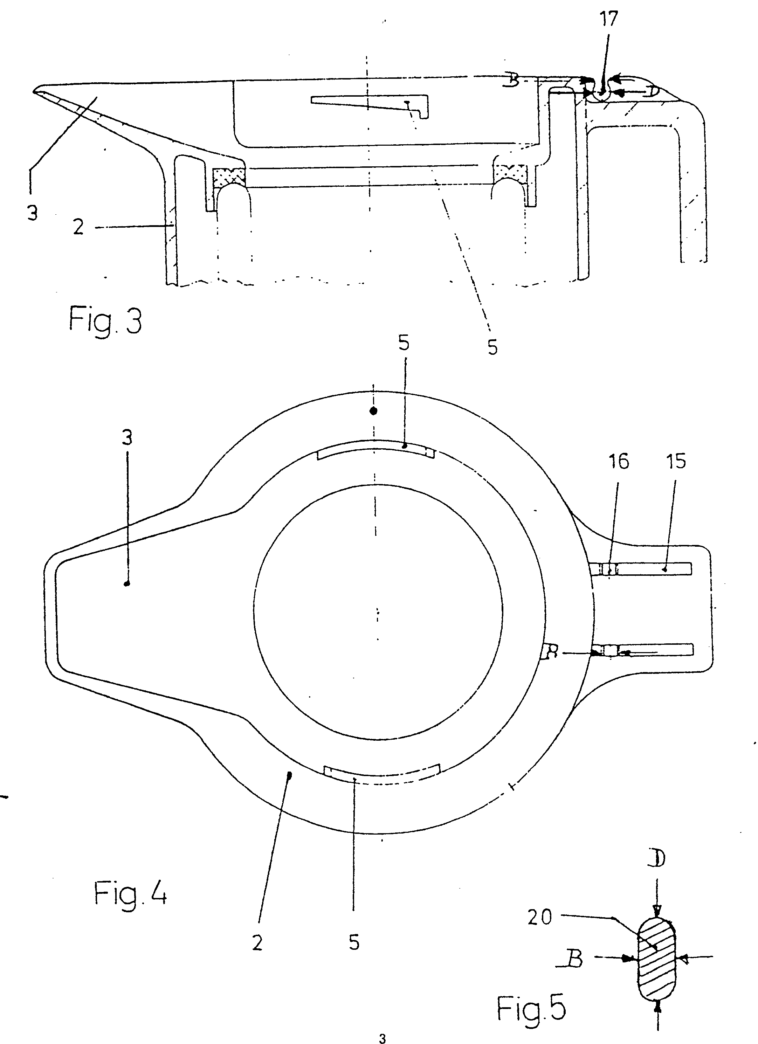

Fig. 3 einen der Fig. 1 entsprechenden Schnitt durch den Kannenkörper

Fig. 4 eine Sicht von oben auf Fig. 3

Fig. 5 einen Schnitt durch den Achszapfen in vergrößerter Wiedergabe

Die in der Zeichnung wiedergegebene Isolierkanne besteht aus einem Isoliergefäß 1 und einem mit einem Ausgießer 3 versehenen Kannenkopf, dessen Öffnung mittels eines durch Schraub- oder Bajonett-Verschluß 5, 6 sicherbaren Deckels 4 verschließbar ist, der in einer Öffnung eines am Kannenrand gehaltenen, nach Art eines zweiarmigen Hebels ausgebildeten Rahmens 7 gehalten ist, mit dessen Hilfe er um eine parallel zur Drehebene des Deckels verlaufende Achse aus seiner Schließstellung in seine das Ausgießen der Flüssigkeit aus der Kanne ermöglichende Offenstellung verschwenkt werden kann. Die Öffnung des zweiarmigen Hebels 7 ist von einem Ringflansch 12 gebildet und der Deckel 4 zweiteilig aus einem inneren, mit einem Gewinde- bzw. Bajonettsegment 6 versehenen Dichtteil 4a und einem äußeren Betätigungsteil 4b ausgebildet, die jedes mit einem Ringflansch 9, 10 versehen sind, die gemeinsam eine Ringnut 11 einschließen, in die der Ringflansch 12 mit allseitigem Spiel eingreift. Das Dichtteil 4a und das Betätigungsteil 4b sind mittels einer Nut-Feder-Raste zusammengeclipst. Das Dichtteil 4a ist mit einem Steg 13 versehen, der in eine Ausnehmung des Betätigungsteils 4b eingreift.

Der Rahmen 7 ist lösbar am Kannenkörper 2 angeordnet, zu welchem Zweck am Kannenkörper 2 Lagerstege 15 mit durch Schlitze 16 geöffneten Lagerschalen 17 und am Rahmen 7 derart parallel abgeflachte Achszapfen 20 angeordnet sind, daß sie in der einen Richtung einen der Lagerschale 17 entsprechenden Durchmesser D und in der hierzu senkrechten Richtung eine dem Schlitz 16 entsprechende Breite B besitzen.

## Patentansprüche

1. Isolierkanne, bestehend aus einem Isoliergefäß (1) und einem mit einem Ausgießer (3) versehenen Kannenkopf, dessen Öffnung mittels eines Schraub- oder Bajonett-Verschluß-Deckels (4) verschließbar ist, der in einer Öffnung eines am Kannenrand gehaltenen, nach Art eines zweiarmigen Hebels ausgebildeten Rahmens (7) gehalten ist, mit dessen Hilfe er um eine parallel zur Drehebene des Deckels verlaufende Achse aus seiner Schließstellung in seine das Ausgießen der Flüssigkeit aus der Kanne ermöglichende Offenstellung verschwenkt werden kann, dadurch gekennzeichnet, daß die Öffnung des zweiarmigen Hebels (7) von einem Ringflansch (12) gebildet und der Deckel (4) zweiteilig aus einem inneren, mit einem Gewinde- bzw. Bajonettsegment (6) versehenen Dichtteil (4a) und einem äußeren Betätigungsteil (4b) ausgebildet ist, die jedes mit einem Ringflansch (9, 10) versehen sind, die gemeinsam eine Ringnut (11) einschließen, in die der Ringflansch (12) mit allseitigem Spiel eingreift.

2. Isolierkanne nach Anspruch 1, dadurch gekennzeichnet, daß das Dichtteil (4a) und das Betätigungsteil (4b) mittels einer Nut-Feder-Raste zusammengeclipst sind.

3. Isolierkanne nach Anspruch 2, dadurch gekennzeichnet, daß das Dichtteil (4a) mit einem Steg (13) versehen ist, der in eine Ausnehmung des Betätigungsteils (4b) eingreift.

4. Isolierkanne nach einem der Ansprüche 1 bis 3, dadurch gekennzeichnet, daß der Rahmen (7) lösbar am Kannenkörper (2) angeordnet ist.

5. Isolierkanne nach Anspruch 4, dadurch gekennzeichnet, daß am Kannenkörper (2) Lagerstege (15) mit durch Schlitze (16) geöffneten Lagerschalen (17) und am Rahmen (7) derart parallel abgeflachte Achszapfen (20) angeordnet sind, daß sie in der einen Richtung einen der Lagerschale (17) entsprechenden Durchmesser (D) und in der hierzu senkrechten Richtung eine dem Schlitz (16) entsprechende Breite (B) besitzen.

## Revendications

1. Pot isolant constitue par un récipient isolant (1) et une tôte munie d'un bec verseur (3), tête dont l'ouverture peut être fermée au moyen d'un couvercle (4) à obturateur à vis ou à baïonnette, couvercle maintenu dans une ouverture d'un cadre (7) maintenu au bord du pot et ayant la forme d'un levier à deux bras à l'aide duquel ledit couvercle peut être basculé autour d'un axe s'étendant parallélément au plan de rotation de ce couvercle afin de sortir de sa position de fermeture et de venir dans une position d'ouverture dans laquelle il est possible de verser le liquide contenu dans le pot, caractérisé par le fait que l'ouverture du levier à deux bras (7) est formée par une bride annulaire (12) et que le couvercle (4) est constitué en deux parties, une partie interne comprenant un élément d'etanchéite (4a) muni d'un segment fileté ou à baïonnette (6) et une partie externe pouvant être manoeuvrée (4b), ces deux parties présentant chacune une bride de forme annulaire (9,10) ces deux brides formant entre elles une rainure annulaire (11) dans laquelle la bride annulaire (12) s'insere tout en laissant du jeu tout autour.

2. Pot isolant selon la revendication 1, caractérisé par le fait que l'élément d'étancheite (4a) et la partie pouvant être manoeuvrée (4b) sont assemblés par encliquetage au moyen d'une rainure et d'un ressort.

3. Pot isolant selon la revendication 2, caractérisé par le fait que l'élément d'étanchéité (4) est muni d'une barrette (13) qui pénètre dans un évidement de la partie mobile (4b).

4. Pot isolant selon l'une des revendications 1 à 3, caractérisé par le fait que le cadre 7 est disposé de manière amovible sur le corps du pot (2).

5. Pot isolant selon la revendication 4, caractérisé par le fait que sur le corps du pot (2) sont disposées des barrettes (15) comportant des coupelles (17) ouvertes suivant des fentes (16) et que sur le cadre (7) sont disposés des tenons (20) aplatis parallélément de telle manière que, dans l'une des directions, leur diamètre corresponde à la coupelle (17) et que dans l'autre direction perpendiculaire à la première, leur largeur (B) corresponde à la fente (16).

## Claims

1. Thermally insulated container, comprising a thermally insulating vessel (1) and a container top which is provided with a pouring means (3), the opening in said top being sealable by means of a screw-type or bayonet-type closure lid (4) which is retained in an aperture in a frame (7) which is retained at the container edge and is in the form of a two-armed lever, by means of which lever to permit liquid to be poured from the container, the lid can be pivoted from its closed position into its open position about an axis extending parallel to the rotational plane of the lid, characterised in that the aperturs in the two-armed lever (7) is formed by an annular flange (12), and the lid (4) is a two-part construction comprising an inner sealing part (4a), which is provided with a threaded or bayonet-type segment (6), and an outer control part (4b), the two parts each being provided with an annular flange (9,10) and jointly enclosing an annular groove (11) in which the annular flange (12) engages with all-round clearance.

2. Insulated container according to claim 1, characterised in that the sealing part (4a) and the control part (4b) are interconnected by a tongue-and-groove locking means.

3. Insulated container according to claim 2, characterised in that the sealing part (4a) is provided with a flange (13) which engages in a recess in the control part (4b).

4. Insulated container according to one of claims 1 to 3, characterised in that the frame (7) is detachably disposed on the container body (2).

5. Insulated container according to claim 4, characterised in that support webs (15) having bearing seats (17) which are opened by slots (16) are disposed on the container bodg (2), and flat journals (20) are disposed on the frame (7) in such a parallel manner that, in one direction, they have a dismeter (D) corresponding to the bearing seat (17) and, in the direction perpendicular thereto, they have a width (B) corresponding to that of the slot (16).

**Fig.1**

**Fig. 2**

0 077 883

Fig. 3

Fig. 4

Fig. 5